# EUROPÄISCHE PATENTSCHRIFT

(11) **EP 1 613 534 B1**
(45) Veröffentlichungstag und Bekanntmachung des Hinweises auf die Patenterteilung: **09.08.2006**
(21) Anmeldenummer: 04725927.0
(22) Anmeldetag: 06.04.2004
(51) Int. Cl.: B64C 27/33

(54) **ROTOR SOWIE DREHFLÜGELFLUGZEUG MIT EINEM DERARTIGEN ROTOR**
ROTOR AND GYROCOPTER WITH SAID ROTOR
ROTOR ET GIRAVION EQUIPE D'UN ROTOR DE CE TYPE

(30) Priorität: 08.04.2003 DE 10316095
(43) Veröffentlichungstag der Anmeldung: 11.01.2006
(73) Patentinhaber: EUROCOPTER DEUTSCHLAND GmbH, 86609 Donauwörth (DE)
(72) Erfinder: BECKER, Gerold, 82216 Maisach (DE); PFALLER, Rupert, 85521 Riemerling (DE)
(86) Internationale Anmeldenummer: PCT/EP2004/003643
(87) Internationale Veröffentlichungsnummer: WO 2004/089748

(56) Entgegenhaltungen:
- EP-A- 0 521 792
- US-A- 3 874 815
- US-A- 4 093 400

## Beschreibung

### TECHNISCHES GEBIET

Die vorliegende Erfindung betrifft einen Rotor gemäß dem Oberbegriff des Patentanspruchs 1. Ferner betrifft die Erfindung ein Drehflügelflugzeug, insbesondere einen Hubschrauber, mit einem derartigen Rotor.

### STAND DER TECHNIK

Die auftriebserzeugenden Rotorblätter eines Rotors eines Drehflügelflugzeugs, insbesondere eines Hubschraubers, werden während des laufenden Betriebs des Rotors insbesondere durch Schlag- und Schwenkbewegungen in verschiedenen Richtungen ausgelenkt und dadurch stark belastet. Rotorblätter werden heutzutage überwiegend aus Faserverbund-Werkstoffen hergestellt.

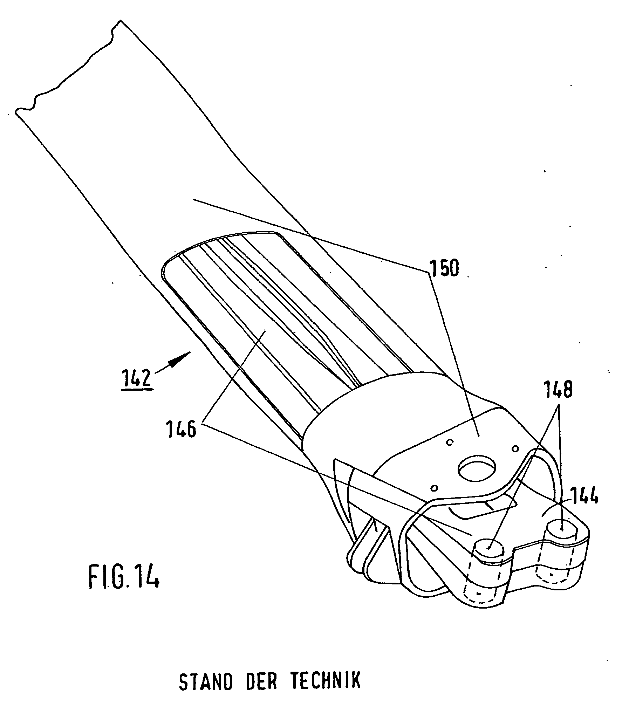

Bei einem lagerlosen Rotor gemäß dem Stand der Technik, wie er in Fig. 14 gezeigt ist, sind lagerlose Rotorblätter üblicherweise über eine Rotorkopfplatte am Rotorkopf befestigt. Die Rotorkopfplatte hat entsprechend der Anzahl der Rotorblätter ausgebildete rotorkopfseitige Blattanschlüsse, die jeweils mit einem Strukturelement eines Rotorblattes verbunden sind. Dieses Strukturelement 142 ist an einem bezogen auf den Rotorkreis radial inneren Ende des Rotorblattes, d.h. dem zum Rotorkopf weisenden Ende, ein rotorkopfseitiger Blattanschluss 144 ausgebildet, der eine Verbindung zum Rotorkopf ermöglicht. Der Übergang von diesem Blattanschluss 144 zu den auftriebserzeugenden Rotorblattbereichen ist als ein Blatthals 146 ausgebildet. Das Strukturelement 142 überträgt das Antriebsdrehmoment vom einem Rotormast und dem Rotorkopf auf das Rotorblatt. Ferner überträgt das Strukturelement 142 die Fliehkräfte des Rotorblattes auf den Rotorkopf. Damit das Strukturelement 142 separat gefertigt bzw. bei Beschädigung ausgetauscht werden kann, wird oft eine separate Trennstelle zwischen dem Strukturelement 142 und dem Rotorblatt eingebaut. Der auftriebserzeugende Rotorblattbereich erstreckt sich von dieser Trennstelle bis zum äußersten Ende, d.h. bis zur Blattspitze des Rotorblattes. Als Trennstelle dienen zum Beispiel jeweils mindestens zwei Bolzen, die an den blatt- und rotorkopfseitigen Blattanschlüssen angreifen. In der Fig. 14 ist das Rotorblatt im des rotorkopfseitigen Blattanschlusses 144 über zwei Bolzen 148 am Rotorkopf angeschlossen. Über die Bolzen 148 werden die Fliehkräfte und das Schwenkmoment abgetragen. Das Schlagmoment wird ebenfalls über diese Bolzen 148 abgetragen, meist unterstützt durch eine obere und untere Auflagefläche des Strukturelements 142 auf der Rotorkopfplatte.

Der Blatthals 146 des Strukturelements 142 eines lagerlosen Rotorblattes, der in dem vorliegenden Fachgebiet auch als Flexbeam bezeichnet wird, und mit einer sog. Steuertüte 150 verkleidet ist, besitzt üblicherweise einen schwenkweichen Bereich, der Bewegungen des Rotorblattes in Schwenkrichtung zulässt. Somit bildet der schwenkweiche Bereich eine fiktive, vertikal orientierte Achse (auch virtuelles Schwenkgelenk genannt), um welche das Rotorblatt Schwenkbewegungen nach vorn und hinten ausführt. Ferner weist der Blatthals 146 des Strukturelements 142 üblicherweise einen schlagweichen Bereich auf, der ein Schlagen des Blattes in vertikaler Richtung ermöglicht. Somit bildet der schlagweiche Bereich eine fiktive, horizontal orientierte Achse (auch virtuelles Schlaggelenk genannt), um welche das Rotorblatt Schlagbewegungen nach oben und unten ausführt. Der Abstand von der Rotorachse des Rotormastes bis zum virtuellen Schlaggelenk bis als Schlaggelenksabstand bezeichnet.

Bei einem lagerlosen Rotor ist dieser Schlaggelenkabstand relativ groß. Der Schlaggelenkabstand liegt z.B. bei etwa 8 bis 12% des Rotorkreisradius, gemessen von der Rotorachse des Rotormastes in radialer Richtung nach außen zur Blattspitze hin. Ein großer Schlaggelenksabstand eines lagerlosen Rotors führt im Betrieb zwar einerseits zu einer hohen Steuerfolgsamkeit und Wendigkeit des Hubschraubers, andererseits aber insbesondere zu einer hohen Schlageigenfrequenz. Diese relativ hohe Schlageigenfrequenz und die daraus resultierenden Vibrationen beim lagerlosen Rotor sind nachteilig für die Flugeigenschaften des Hubschraubers und führen zu hohen Belastungen des Blattanschlusses 144 und des Blatthalses 146. Blattanschluss 144 und Blatthals 146 müssen deshalb entsprechend stark dimensioniert sein, um der den auftretenden Beanspruchung zu widerstehen.. Bei herkömmlichen Hubschrauberrotoren wird aus diesen Gründen eine niedrige Schlag- und Schwenkeigenfrequenz angestrebt.

Infolge der hohen Belastungen des Rotorblattes beim lagerlosen Rotor und der damit zu gewährleistenden Festigkeit des Rotorblattes ist es äußerst schwierig, den Schlaggelenkabstand zu reduzieren bzw. unter ein bestimmten Wert zu bringen. Ein geringer Schlaggelenkabstand würde bei konventionellen lagerlosen Rotoren die Haltbarkeit und Lebensdauer des jeweiligen Rotorblattes erheblich reduzieren, was natürlich nachteilig oder sogar gefährlich ist. Anderseits wäre für diverse Einsatzzwecke ein niedriger Schlaggelenksabstand jedoch erstrebenswert, da Hubschrauber mit derartigen Rotorblättern von Piloten, Besatzung und Fluggäste als komfortabler empfunden werden.

Bei speziellen Rotoren, wie z.B. Kipprotoren (sog. Tilt-Rotoren) von Kipprotorhubschraubern bzw. -flugzeugen wird aus diversen Gründen ein besonders schwenksteifer Rotor gefordert.

Aus der EP 0 521 792 A1 ist ein Rotor mit den Merkmalen des Oberbegriffs des Patentanspruchs 1 bekannt.

Die US-P 3 874 815 und die US-P 4 093 400 offenbaren, wie im Übrigen die zuvor genannte EP 0 521 792 A1 auch, jeweils einen Rotor, der miteinander verbundene Rotorblätter besitzt, deren die Schlag-Hilfsgelenke sowie das dazwischen liegende virtuelle Schlaggelenk enthaltender Blattanschlussbereich als durchgehender Blattanschlussarm ausgebildet ist.

### DARSTELLUNG DER ERFINDUNG

Der Erfindung liegt die Aufgabe beziehungsweise das technische Problem zugrunde, einen Rotor für ein Drehflügelflugzeug zu schaffen, der verbesserte Flugeigenschaften, einen erhöhten Flugkomfort sowie eine erhöhte Sicherheit und Zuverlässigkeit gewährleistet und der in mindestens einer Ausführungsform auch als Kipprotor für ein Kipprotor-Drehflügelflugzeug geeignet ist. Ferner soll ein Drehflügelflugzeug mit einem derartigen Rotor bereitgestellt werden.

Diese Aufgabe wird gelöst durch einen erfindungsgemäßen Rotor mit den Merkmalen des Anspruchs 1.

Dieser Rotor umfasst mindestens ein an einem Rotorkopf anschließbares Rotorblatt, welches über einen Blatthals mit einem virtuellen Schlaggelenk in Form eines biegeweichen, biegeelastischen Blatthalsabschnitts verfügt, wobei in einem Blattanschlussbereich des Blatthalses zwei bezogen auf einen Rotorradius in radialer Längsrichtung des Rotorblattes voneinander beabstandete Schlag-Hilfsgelenke vorgesehen sind, zwischen denen im Wesentlichen das virtuelle Schlaggelenk angeordnet ist und zwischen denen der Blatthals bei einer Schlagbewegung biegeelastisch und bogenförmig deformierbar bzw. zusätzlich deformierbar ist. Je nach Ausgestaltung des Blatthalses kann dieser hierbei eine symmetrische oder asymmetrische Biegelinie aufweisen.

Die Achsen oder scheinbaren Achsen der Schlag-Hilfsgelenke verlaufen vorzugsweise im Wesentlichen parallel zu der konstruktiven bzw. natürlichen Schlagachse des Rotorblattes. Das heißt, die Achsen der Schlag-Hilfsgelenke erstrecken sich vorzugsweise im Wesentlichen parallel zu der durch das virtuelle Schlaggelenk gebildeten Schlagachse. Die beiden Schlag-Hilfsgelenke bilden eine Art Zweipunktlager, welches den Blatthals an zwei in radialer Richtung des Rotorblattes voneinander beabstandeten Stellen gelenkig bzw. scheinbar gelenkig abstützt. Die Schlag-Hilfsgelenke können zumindest teilweise in Differentialbauweise und/oder als integraler Bestandteil des Rotorblattes und/oder des Rotorkopfes bzw. dessen Komponenten ausgeführt sein.

Die erfindungsgemäße Lösung gestattet es, einen Rotor, insbesondere einen sog. gelenk- und lagerlosen Rotor bereitzustellen, bei dem das oder die Rotorblätter biegeweich und mit einem geringen und gegenüber vorbekannten lagerlosen Rotoren erheblich reduzierten virtuellen Schlaggelenksabstand an den Rotorkopf bzw. Rotormast angeschlossen werden können. Dadurch ist es möglich, die Flugeigenschaften eines mit einem solchen Rotor ausgestatteten Drehflügelflugzeugs zu verbessern und den Flugkomfort erheblich zu erhöhen. Der erfindungsgemäße Rotor weist darüber hinaus geringere Vibrationen als konventionelle lagerlose Rotoren auf, was sich wiederum positiv auf die Flugeigenschaften und den Komfort des Drehflügelflugzeugs auswirkt und die Belastungen des Blattanschlusses und des Blatthalses eines jeweiligen Rotorblattes reduziert. Es ist deshalb nicht notwendig, den Blattanschlussbereich des Rotorblattes so stark wie bei einem konventionellen lagerlosen Rotorblatt zu dimensionieren, weil die auftretenden Kräfte und Momente vorteilhafter und günstiger abgesetzt werden können. Das Gewicht des Rotorblattes und damit wiederum das Gesamtgewicht des Rotors kann folglich reduziert werden.

Durch die zwei Schlag-Hilfsgelenke, die, wie nachfolgend noch näher erläutert werden wird, auch lastabtragende Funktionen übernehmen können und hierbei eine Redundanz gewährleisten, wird bei dem erfindungsgemäßen Rotor zudem die Ausfall- und Versagenswahrscheinlichkeit erheblich gesenkt. Für den Rotor kann somit eine Fail-Safe-Konstruktion venrvirklicht werden. Trotz des geringen Schlaggelenkabstands besitzt der erfindungsgemäße Rotor eine hohe Haltbarkeit und Lebensdauer. Anders als beim Stand der Technik ist zudem eine separate Trennstelle zwischen dem Blattanschluss und dem Rotorblatt nicht erforderlich. Das erfindungsgemäße Rotorkonzept lässt sich für Rotoren mit einem oder mehreren Rotorblättern und einer geraden oder ungeraden Rotorblattzahl realisieren.

Der erfindungsgemäße Rotor ist aufgrund der Tatsache, dass er sowohl mit einem kleinen Schlaggelenksabstand als auch bei Bedarf mit sehr schwenksteifen Rotorblättern ausführbar ist, besonders bei Kipprotor-Drehflügelflugzeugen von großem Vorteil. Denn bei einem Kipprotor muss das virtuelle Schlaggelenk möglichst zentral angeordnet sein, d.h. der Schlaggelenksabstand sollte idealer Weise bei 0% liegen. Diese Forderung kann der erfindungsgemäße Rotor voll erfüllen. Nur so lassen sich auch die ansonsten beim Schlagen des Rotorblattes aus den Corioliskräften entstehenden Schwenkverformungen vermeiden. Bei einer schwenksteifen Konstruktion des Rotors und ungeminderter Corioliskraft könnte es hingegen unmöglich werden, die Festigkeit des Rotors zu gewährleisten.

Weitere bevorzugte und vorteilhafte Ausgestaltungsmerkmale des erfindungsgemäßen Rotors sind Gegenstand der Unteransprüche 2 bis 29.

Die der Erfindung zugrunde liegende Aufgabe wird des weiteren gelöst durch ein erfindungsgemäßes Drehflügelflugzeug mit den Merkmalen des Anspruchs 30.

Diese Drehflügelflugzeug besitzt im Wesentlichen die gleichen Vorteile, wie Sie bereits im Zusammenhang mit dem erfindungsgemäßen Rotor beschrieben wurden. Insbesondere kann dieses Drehflügelflugzeug besonders vorteilhaft als Kipprotorhubschrauber ausgeführt werden.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische, perspektivische Draufsicht auf einen erfindungsgemäßen Rotor gemäß einer ersten Ausführungsform;
- Fig. 2: eine schematische, stark vereinfachte Seitenansicht des Rotors von Fig. 1 mit der Darstellung eines einzelnen Rotorblattes, wobei der scheinbare Schlaggelenkabstands gleich Null ist;
- Fig. 2a: eine zu der Fig. 2 analoge Darstellung für einen scheinbaren Schlaggelenkabstand kleiner Null;
- Fig. 2b: eine zu der Fig. 2 analoge Darstellung für einen kleinen scheinbaren Schlaggelenkabstand größer Null;
- Fig.3: eine schematische, perspektivische Draufsicht auf einen erfindungsgemäßen Rotor gemäß einer zweiten Ausführungsform;
- Fig. 4: eine schematische, perspektivische Draufsicht auf einen erfindungsgemäßen Rotor gemäß einer dritten Ausführungsform;
- Fig. 5: eine schematische, perspektivische Draufsicht auf einen erfindungsgemäßen Rotor gemäß einer vierten Ausführungsform;
- Fig. 6: eine schematische Perspektivansicht eines Blattanschlussbereichs eines Rotorblattes eines erfindungsgemäßen Rotors gemäß einer fünften Ausführungsform;
- Fig. 7: eine schematische, perspektivische Draufsicht auf den erfindungsgemäßen Rotor gemäß der fünften Ausführungsform;
- Fig.8: eine schematische, perspektivische Draufsicht auf einen erfindungsgemäßen Rotor gemäß einer sechsten Ausführungsform;
- Fig. 9: eine schematische Draufsicht auf einen erfindungsgemäßen Rotor gemäß einer siebten Ausführungsform;
- Fig. 10: eine schematische Draufsicht auf einen erfindungsgemäßen Rotor gemäß einer achten Ausführungsform;
- Fig. 11: eine schematische Draufsicht auf einen erfindungsgemäßen Rotor gemäß einer neunten Ausführungsform;
- Fig. 12: eine schematische Draufsicht auf einen erfindungsgemäßen Rotor gemäß einer zehnten Ausführungsform;
- Fig. 13: eine schematische Draufsicht auf einen erfindungsgemäßen Rotor gemäß einer elften Ausführungsform;
- Fig. 14: eine schematische Perspektivansicht eines wesentlichen Bereichs eines Rotorblattes eines lagerlosen Rotors gemäß dem Stand der Technik.

### DARSTELLUNG VON BEVORZUGTEN AUSFÜHRUNGSBEISPIELEN

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

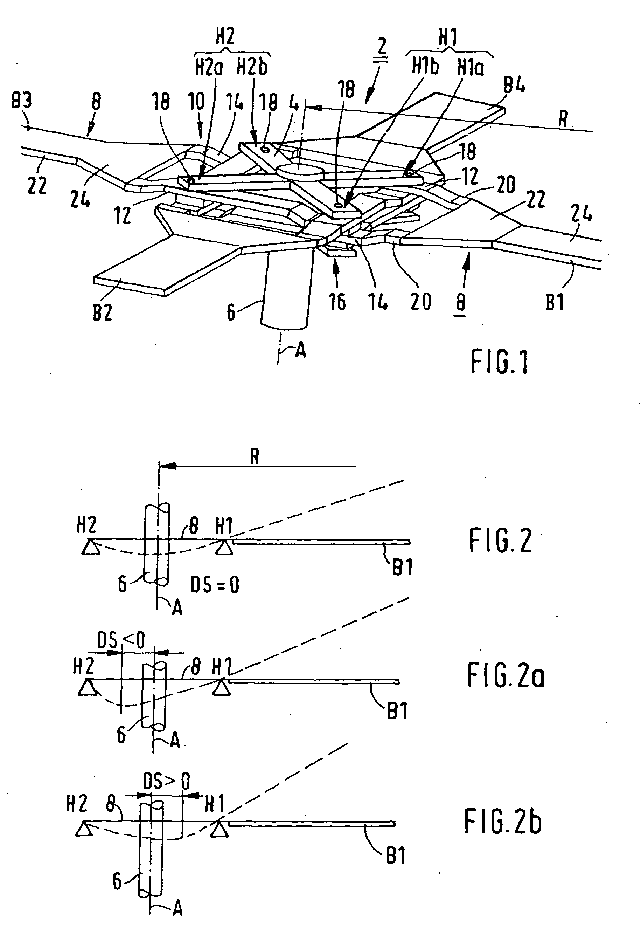

Fig. 1 zeigt eine schematische, perspektivische Draufsicht auf einen erfindungsgemäßen, gelenklosen Rotor gemäß einer ersten Ausführungsform.

Der Rotor umfasst einen Rotorkopf 2 mit einem plattenförmigen, vierarmigen und in Schlagrichtung biegeweichen Rotorstern 4, der drehfest an einem Rotormast 6 angreift und als Drehmomentenübertragungselement dient, sowie vier gleichartig ausgestaltete Rotorblätter B1, B2, B3, B4. Die auftriebserzeugende Bereiche der Rotorblätter sind in der Zeichnung der Übersichtüchkeit halber nicht dargestellt. Die Rotorblätter sind im Wesentlichen aus Faserverbundwerkstoff gefertigt. Jeweils zwei Rotorblätter B1, B3; B2, B4, die ein Rotorblattpaar bilden, liegen sich um 180° versetzt gegenüber. Die so gebildeten zwei Rotorblattpaare wiederum sind um 90° gegeneinander versetzt angeordnet. Jedes Rotorblatt verfügt zum Beispiel über einen Blatthals 8 mit biegeweichen, biegeelastischen Blatthalsabschnitten. Die Rotorblätter B1, B2, B3, B4 sind im Bereich ihrer Blatthalsabschnitte über den Rotorstern 4 drehfest an dem Rotorstern 4 angeschlossen. Ferner sind die Rotorblätter auf eine nachfolgend noch näher beschriebene Art und Weise miteinander verbunden.

Fig. 2 zeigt eine schematische, stark vereinfachte Seitenansicht des Rotors von Fig. 1. Der Einfachheit halber ist in dieser Zeichnung nur ein einzelnes Rotorblatt B1 dargestellt. Die nachfolgenden Erläuterungen gelten jedoch analog auch für die anderen Rotorblätter. Wie aus der Fig. 2 hervorgeht, sind in einem Blattanschlussbereich des Blatthalses 8 des Rotorblattes B1 jeweils zwei Schlag-Hilfsgelenke H1, H2 vorgesehen, die bezogen auf den Rotorradius R des Rotors in bzw. vorwiegend in radialer Richtung, d.h. in Längsrichtung des Rotorblattes B1, voneinander beabstandet sind. Die Schlag-Hilfsgelenke H1, H2 stützen den Blatthals 8 also an zwei in Radialrichtung des Rotors voneinander beabstandeten Stellen gelenkig oder scheinbar gelenkig ab. Es ergibt sich eine Art Zweipunktlagerung. Zwischen diesen zwei Schlag-Hilfsgelenken H1, H2 ist der Blatthals 8 bei einer Schlagbewegung des Rotorblattes B1 biegeelastisch und bogenförmig deformierbar. Die Auslenkung des Rotorblattes B1 und die Biegung des Blatthalses 8 ist durch eine gestrichelte Linie angedeutet. Aufgrund dieser Ausgestaltungsweise verhält sich das Rotorblatt B1 bei einer Schlagbewegung in seiner Gesamtheit so, als ob sein Schlaggelenk scheinbar genau auf der Rotorachse A liegt. Der (scheinbare) Schlaggelenksabstand DS dieses virtuellen Schlaggelenks beträgt somit Null (DS = 0). In den nachfolgenden Figuren sind die Hilfsgelenke H1, H1 aus Gründen der besseren Übersichtlichkeit weitgehendst immer nur für ein einzelnes Rotorblatt angegeben. Für die jeweils anderen Rotorblätter ist die Anordnung der Hilfsgelenke analog.

Fig. 2a skizziert als Vergleich und analog zu der Darstellung von Fig. 2 einen Fall, bei dem der (scheinbare) Schlagsgelenkabstand DS negativ, also kleiner Null ist ( DS < 0). Fig. 2b wiederum skizziert analog zu der Darstellung von Fig. 2 einen Fall, bei dem der (scheinbare) Schlagsgelenkabstand DS größer Null (DS > 0), aber im Vergleich zu konventionellen gelenklosen Rotoren immer noch sehr klein, d.h. sehr nahe am Rotormast 6 gelegen ist.

Blickt man bei dem Rotor nach Fig. 1 von oben oder unten auf die Rotorkreisebene, so ist besonders deutlich zu erkennen, dass der die zwei Schlag-Hilfsgelenke H1, H2 sowie das dazwischen liegende virtuelle Schlaggelenk enthaltende Blattanschlussbereich eines jeweiligen Rotorblattes B1, B2, B3, B4 in Form einer Blattanschlussgabel 10 mit zwei (oder auch mehreren) schmalen, streifen- oder plattenförmigen Anschlussarmen 12, 14 ausgebildet ist, die u.a. als Zugbänder fungieren. Diese zwei bezogen auf den Rotorkreis in tangentialer Richtung bzw. bezogen auf das jeweilige Rotorblatt B1, B2, B3, B4 in Tiefenrichtung des Rotorblattprofils voneinander beabstandeten Anschlussarme 12, 14 verlaufen im Wesentlichen in Längsrichtung des Rotorblattes und im Wesentlichen parallel zueinander seitlich links und rechts neben dem Rotormast 6 bzw. der Rotorachse A her und in radialer Richtung weiter an dieser vorbei. Die Rotorachse A erstreckt sich also zwischen den zwei Anschlussarmen 12, 14. Die Anschlussarme 12, 14 besitzen in diesem Beispiel in Schlagrichtung des Rotorblattes eine geringere Biegesteifigkeit bzw. ein geringeres Flächenträgheitsmoment als in der Schwenkrichtung.

Jeweils zwei einander gegenüberliegende Rotorblätter B1, B3; B2, B4 eines Rotorblattpaares sind über ihre Blattanschlussgabeln 10, d.h. ihre Anschlussarme 12, 14 hinweg in Längsrichtung miteinander verbunden. Hierbei überlappen sich die Anschlussarme 12, 14 in ihrer Längsrichtung zumindest in einem Teilbereich, d.h. im vorliegenden Fall im Wesentlichen über ihre gesamte Länge. Hierbei verlaufen jeweils zwei Anschlussarme 12, 14 der jeweiligen Rotorblätter übereinander. Aufgrund dieser Anordnung und der gegenseitigen Verbindung nehmen die Anschlussarme 12, 14 des jeweils einen Rotorblattes (z.B. B1) die Fliehkräfte des jeweils anderen Rotorblattes (z.B. B3) des Rotorblattpaares auf. Und die Fliehkräfte werden am Rotormast 6 vorbeigeleitet. Die Fliehkräfte der Rotorblätter B1, B2, B3, B4 haben somit im Idealfall keine Auswirkungen auf die Gestaltung der Mastanbindung der Rotorblätter B1, B2, B3, B4.

Wie in der Fig. 1 des Weiteren erkennbar, überlappen bzw. überkreuzen die Anschlussarme 12, 14 des ersten Rotorblattpaares überdies die Anschlussarme 12, 14 des zweiten Rotorblattpaares. Dadurch liegen in dem entstehenden Überkreuzungsbereich 16 vier Anschlussarme, d.h. ein Anschlussarm von jedem Rotorblatt B1, B2, B3, B4, übereinander. An dem Überkreuzungsbereich 16 sind die Anschlussarme 12, 14 sowohl untereinander als auch mit dem Rotorstern 4 verbunden. Die Verbindung erfolgt in diesem Beispiel mit jeweils einem Bolzen 18, der sich annähernd parallel zur Rotorachse A durch den Rotorstern 4 und die jeweiligen Anschlussarme 12, 14 hindurch erstreckt. Für den in Fig. 1 gezeigten Rotor sind somit vier Bolzen 18 erforderlich, um die Rotorblätter B1, B2, B3, B4 über ihre Anschlussarme 12, 14 untereinander und mit dem Rotorstern 4 zu verbinden.

Diese Anordnung besitzt multifunktionale Eigenschaften, wie aus den nachfolgenden Erläuterungen ersichtlich werden wird.

Jeweils ein Überkreuzungsbereich 16 der in Schlagrichtung biegeweichen, biegeelastischen Anschlussarme 12, 14 bildet zusammen mit dem Bolzen 18 zwischen den Armen des Rotorsterns 4 ein Schlag-Hilfsgelenk H1, H2. Damit liegt ein jeweiliges Schlag-Hilfsgelenk H1, H2 also in einem Überlappungs- bzw. Überkreuzungsbereich 16 der Anschlussarme 12, 14 der Rotorblätter B1, B2, B3, B4. Pro Rotorblatt B1, B2, B3, B4 ergeben sich somit ferner jeweils zwei in Längsrichtung des Rotorblattes B1, B2, B3, B4 voneinander beabstandete Schlag-Hilfsgelenke H1, H2. Da die Blattanschlussgabel 10 des jeweiligen Rotorblattes B1, B2, B3, B4 zwei Anschlussarme 12, 14 aufweist, hat ein jeweiliges Schlag-Hilfsgelenke H1, H2 zwei seitlich nebeneinander liegende Gelenkbereiche H1a, H1b; H2a, H2b und pro Anschlussarm 12, 14 zwei in radialer Richtung und zwei in tangentialer Richtung voneinander beabstandete Bolzen 18. Beide Anschlussarme 12, 14 können sich zwischen den beiden radial beabstandeten Bolzen 18 verformen bzw. verbiegen, wenn das Blatt (hier: z.B. B1) in Schlagrichtung belastet wird. Hierbei können die Arme des Rotorsterns 4 ebenfalls eine gewisse Verformung mitmachen. Dies alles führt zu einer zusätzlichen Weichheit, die wiederum zu einem kleineren Schlaggelenksabstand führt.

In der Fig. 1 gelten die Bezugszeichen H1 und H2 nur für die Schlag-Hilfsgelenke des Rotorblattes B1. Für die anderen Rotorblätter B2, B3, B4 ist das zuvor Gesagte analog anwendbar. Aufgrund dieser Ausgestaltungsweise und der zuvor erläuterten Anordnung der Rotorblätter B1, B2, B3, B4 besitzt ein jeweiliges Rotorblattpaar, welches zwei einander gegenüberliegende Rotorblätter B1, B3; B2, B3 aufweist, zwei gemeinsame Schlag-Hilfsgelenke H1, H2 und gewissermaßen ein gemeinsames virtuelles Schlag-Gelenk.

Da der Rotor im vorliegenden Fall zwei Rotorblattpaare umfasst, besitzen alle Rotorblätter B1, B2, B3, B4 zudem gemeinsame Schlag-Hilfsgelenke H1, H2, die in einem gemeinsamen Blatthalsverbindungsbereich, nämlich im jeweiligen Überkreuzungsbereich 16 liegen. Aufgrund der Biegeweichheit der Anschlussarme 12, 14 und des Rotorsterns 4 können auch diese Überkreuzungsbereiche 16 der Biegung der Anschlussarme 12, 14 weitgehend folgen, ohne dass hierbei eine zu große Unstetigkeitsstelle in der Biegelinie entsteht. Damit sich die Anschlussarme 12, 14 bei einer Schlagbewegung auch im Überkreuzungsbereich bzw. über diesen hinweg noch einfacher elastisch verbiegen können, ist es z.B. möglich, im Bereich des Bolzens 18 ballige Anlageflächen an den Anschlussarmen 12, 14 und/oder dem Rotorstern 4 vorzusehen oder entsprechende Zwischenelemente bereitzustellen. Die letztgenannte Anordnung empfiehlt sich beispielsweise dann, wenn der Rotorstern 4 in Schlagrichtung relativ steif ausgebildet ist.

Wie bereits weiter oben kurz angedeutet, ist ein jeweiliges Rotorblatt B1, B2, B3, B4 im Bereich der beiden Schlag-Hilfsgelenke H1, H2 über den Rotorstern 4 und die Bolzen 18 drehfest mit dem Rotormast 6 verbunden. Die Bolzen 18 der Schlag-Hilfsgelenke H1, H2 dienen zusammen mit dem Rotorstern folglich gleichzeitig auch als Drehmomentenübertragungselemente. Diese Drehmomentenübertragungselemente greifen hierbei an einem Abschnitt an den Rotorblättern B1, B2, B3, B4 an, an dem sich mehrere Anschlussarme 12, 14 überlappen und in dem mindestens eines der Schlag-Hilfsgelenke H1, H2 liegt.

Wie in Fig. 1 mit dem Bezugszeichen 20 angedeutet ist, besitzt der Blatthals 8 des Weiteren an einem Bereich, der sich bezogen auf den Rotorradius R und die Längsrichtung des Rotorblattes B1, B2, B3, B4 an das radial äußere der beiden Schlag-Hilfsgelenke H1, H2 in Richtung zur Rotorblattspitze (nicht gezeigt) hin anschließt, einen weiteren biegeweichen, schlagweichen Blatthalsabschnitt 20. Dieser Abschnitt 20 verbessert die Biege- und Verformungseigenschaften der Anschlussarme 12, 14 bei einer Schlagbewegung zusätzlich.

Es ist des Weiteren hervorzuheben, dass bei der erfindungsgemäßen Konstruktion die beiden Schlag-Hilfsgelenke H1, H2 bzw. Teile davon als Fliehkraftabtragungselemente fungieren. So bilden die Bolzen 18 der Schlag-Hilfsgelenke H1, H2 eines jeweiligen Rotorblattes B1, B2, B3, B4 pro Anschlussarm 12, 14 zwei in Längsrichtung des Blattes bzw. in Fliehkraftrichtung voneinander beabstandete, hintereinander angeordnete Fliehkraftabtragungselemente. Von diesen Bolzen 18 nimmt mindestens einer im laufenden Betrieb des Rotors die am Rotorblatt B1, B2, B3, B4 auftretenden Fliehkräfte auf und leitet sie in den jeweiligen Anschlussarm 12, 14 ein. Jeder Fliehkraftstrang, d.h. jeder Anschlussarm 12, 14 des Blattanschlusses ist in Fliehkraftrichtung durch jeweils zwei Bolzen 18 also doppelt gelagert und gesichert. Hierbei ist es gänzlich ausreichend, aber natürlich nicht zwingend erforderlich, dass einer der beiden Bolzen 18 bzw. Lager die Fliehkraft aufnimmt. Übernimmt der erste, radial äußere Bolzen 18 diese Aufgabe, so ist der Bereich zwischen den beiden Schlag-Hilfsgelenken H1, H2 im laufenden Betrieb des Rotors fliehkraftfrei, was die Durchbiegung dieses Bereiches und die Schlagweichheit vergrößert. Diese Bauweise bietet eine vorteilhafte Redundanz, da bei Versagen von einem der zwei Bolzen 18 die Fliehkraft stets noch durch den zweiten Bolzen 18 aufgenommen werden kann.

Überdies ist zu berücksichtigen, dass bei dem erfindungsgemäßen Rotor ein einzelnes Rotorblatt B1, B2, B3, B4 insgesamt durch vier Lagerpunkte bzw. Bolzen 18 gehalten und gesichert ist. Das jeweilige Rotorblatt B1, B2, B3, B4 besitzt infolge der Blattanschlussgabel 10 ja zwei Anschlussarme 12, 14 mit jeweils zwei Lagerstellen bzw. Bolzen 18. Dies ist insbesondere für eine verbesserte Sicherheit in Schwenkrichtung von Bedeutung. Fällt nämlich einer der vier Bolzen 18 aus, so bleibt das jeweilige Rotorblatt B1, B2, B3, B4 in Schwenkrichtung weiterhin momentenfest gehalten und kann das Drehmoment vom Rotormast 6 und dem Rotorstern 4 immer noch übertragen. Der Einfluss eines Bolzenversagens auf die Flugmechanik ist folglich nicht so gravierend wie bei konventionellen Konstruktionen nach dem Stand der Technik (siehe Fig. 14), bei denen beim Ausfall eines von zwei Bolzen das Rotorblatt dann in Schwenkrichtung nicht mehr momentenfest gelagert, sondern drehbar ist. Insgesamt ist mit dem erfindungsgemäßen Rotor deshalb auf vergleichsweise einfache und effektive Art und Weise eine Fail-Safe-Konstruktion zu verwirklichen, die eine hohe Sicherheit bietet.

Weil die Rotorblätter B1, B2, B3, B4 im Bereich Ihrer Schlag-Hilfsgelenke H1, H2 miteinander verbunden sind, bildet ein jeweiliges Schlag-Hilfsgelenk H1, H2, oder ein Teil davon, sprich ein Bolzen 18, eines jeweiligen Rotorblattes (z.B. B1) gleichzeitig auch ein Fliehkraftabtragungselement für mindestens ein jeweils anderes Rotorblatt (z.B. B3). Dadurch wird die erforderliche Anzahl von Bauteilen für den Rotor erheblich reduziert.

Die Anschlussarme 12, 14 eines jeweiligen Rotorblattes B1, B2, B3, B4 gehen in radialer Richtung nach außen in einen breiten, plattenartigen, trapezförmigen Basisabschnitt 22 über, der sich bei Betrachtung in der Draufsicht radial nach außen verjüngt und in einen streifenförmigen, distalen (d.h. dem Rotormast abgewandten) Blatthalsbereich 24 mündet, an den sich der eigentliche auftriebserzeugende Profilbereich des Rotorblattes B1, B2, B3, B4 anschließt. Sowohl die Anschlussarme 12, 14 als auch der Basisabschnitt 22 und der streifenförmige, distale Blatthalsbereich 24 sind drillweich (torsionsweich), so dass auf einfache Art und Weise ein drillweicher Blatthals für eine lagerlose Blattwinkelverstellung realisierbar ist. Diese Blatthalsbereiche, die per se relativ flach ausgebildet sind, lassen sich überdies auf recht einfache Art und Weise aerodynamisch günstig gestalten bzw. verkleiden. Aufgrund dieser Ausgestaltungsweise und dem Umstand, dass die beiden Anschlussarme 12, 14 eines jeweiligen Rotorblattes B1, B2, B3, B4 seitlich an der Rotorachse A bzw. dem Rotormast 6 vorbeigeführt und folglich auch die Bolzen 18 bezogen auf den Rotorkreis in tangentialer Richtung relativ weit voneinander beabstandet sind, ergeben sich weitere Vorteile.

Denn aus dieser Bauweise resultiert ein Rotorblattanschluss mit einer im Vergleich zu konventionellen Rotoren hohen Schwenksteifigkeit. Hierbei übernehmen die sich bei einer Schwenkbewegung in Schwenkrichtung geringfügig elastisch verbiegenden Anschlussarme 12, 14, die Bolzen 18 sowie ggf. auch die Arme des Rotorsterns 4, die sich ebenfalls geringfügig elastisch verbiegen können, die Funktion eines Schwenkgelenks. Das Schwenkmoment wird hierbei über die Bolzen 18 abgesetzt, die eine breite Stützbasis bilden und somit nur gering belastet werden.

Aus der Fig. 1 geht ferner hervor, dass die beiden Anschlussarme 12, 14 eines jeweiligen Rotorblattes B1, B2, B3, B4 mehrfach nach oben und unten abgewinkelt sind, so dass sich die beiden Anschlussarme 12, 14 bzw. wesentliche Abschnitte davon in verschiedenen Ebenen erstrecken. Die Anschlussarme 12, 14 weisen nach unten abgewinkelte bzw. nach unten abgestufte freie Enden auf. Bei der in der Zeichnung dargestellten Anordnung ergibt sich im montierten Zustand der Rotorblätter B1, B2, B3, B4 somit eine Ineinanderschachtelung ihrer Anschlussarme 12, 14, was zu einer sehr geringen Gesamt-Bauhöhe des Rotorkopfes 2 führt. Die Ineinanderschachtelung ist so gewählt dass die Rotorblätter B1, B2, B3, B4 hierbei in einer gemeinsamen Rotor- bzw. Rotorblattebene liegen. Unter Berücksichtigung der bereits zuvor erläuterten Merkmale ist somit ein lager- und gelenkloser Rotor mit einem virtuellen Schlaggelenk, einem steifen Schwenkgelenk und einem drillweichen Blatthals für eine lagerlose Blattwinkelverstellung realisierbar.

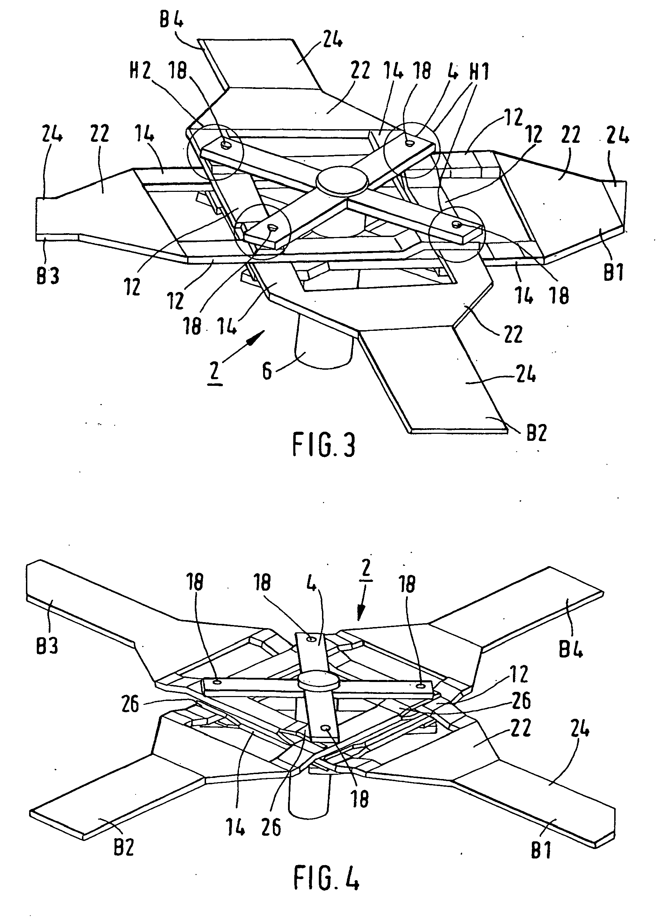

Grundsätzlich können die beiden Anschlussarme 12, 14 eines jeweiligen Rotorblattes B1, B2, B3, B4 jedoch auch in einer gemeinsamen Ebene bzw. in einer gemeinsamen Ebene mit dem Basisabschnitt und dem streifenförmigen Blatthalsbereich liegen. Eine solche Ausführungsform zeigt die Fig. 3, die eine schematische, perspektivische Draufsicht auf einen erfindungsgemäßen Rotor gemäß einer zweiten Ausführungsform darstellt. Pro Rotorblatt B1, B2, B3, B4 ist hier das freie Ende eines Anschlussarms 12, 14 nach oben und das des anderen nach unten abgewinkelt bzw. abgestuft.

Fig. 4 zeigt eine schematische, perspektivische Draufsicht auf einen erfindungsgemäßen Rotor gemäß einer dritten Ausführungsform. Diese Variante ähnelt weitgehend der von Fig. 1. Jedoch sind die freien Enden der Anschlussarme 12, 14 eines Rotorblattes B1, B2, B3, B4 jeweils in Form eines Gabelterminals 26 ausgebildet. Im zusammengebauten Zustand des Rotors liegt das Gabelterminal 26 im Bereich eines Schlag-Hilfsgelenkes H1, H1 und ist mit einem in der Nähe des Basisabschnitts 22 befindlichen streifenförmigen Bereich eines Anschlussarms 12, 14 eines jeweils benachbarten Rotorblatts verbunden. Durch die Gabelterminals 26 kann eine höhere Haltefestigkeit der an den Schlag-Hilfsgelenken H1, H2 befindlichen Verbindungsstellen und eine leichtere Positionierbarkeit beim Montieren der Rotorblätter B1, B2, B3, B4 erzielt werden.

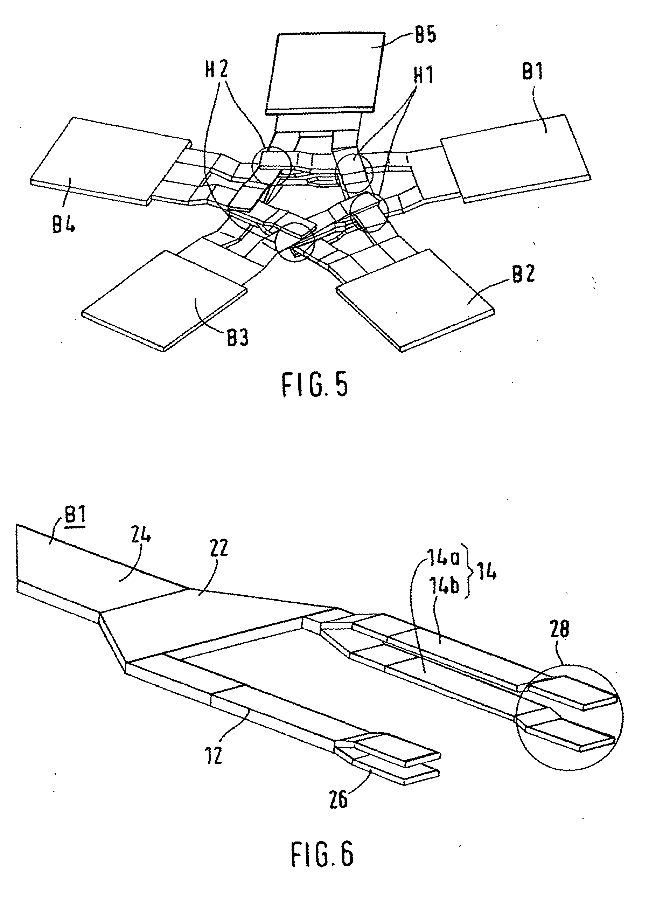

Fig. 5 zeigt eine schematische, perspektivische Draufsicht auf einen erfindungsgemäßen Rotor gemäß einer vierten Ausführungsform. Diese Variante ähnelt der von Fig. 4, jedoch handelt es sich hier um einen Rotor mit einer ungeraden Anzahl von Rotorblättern, d.h. im vorliegenden Fall fünf Rotorblätter B1 bis B5. Obwohl sich hier die Rotorblätter B1 bis B5 nicht jeweils paarweise genau in einem Winkel von 180° gegenüberliegen, kann ein jeweiliges Rotorblatt doch Fliehkraftanteile der jeweils in einem schrägen Winkel gegenüberliegenden Rotorblätter abtragen.

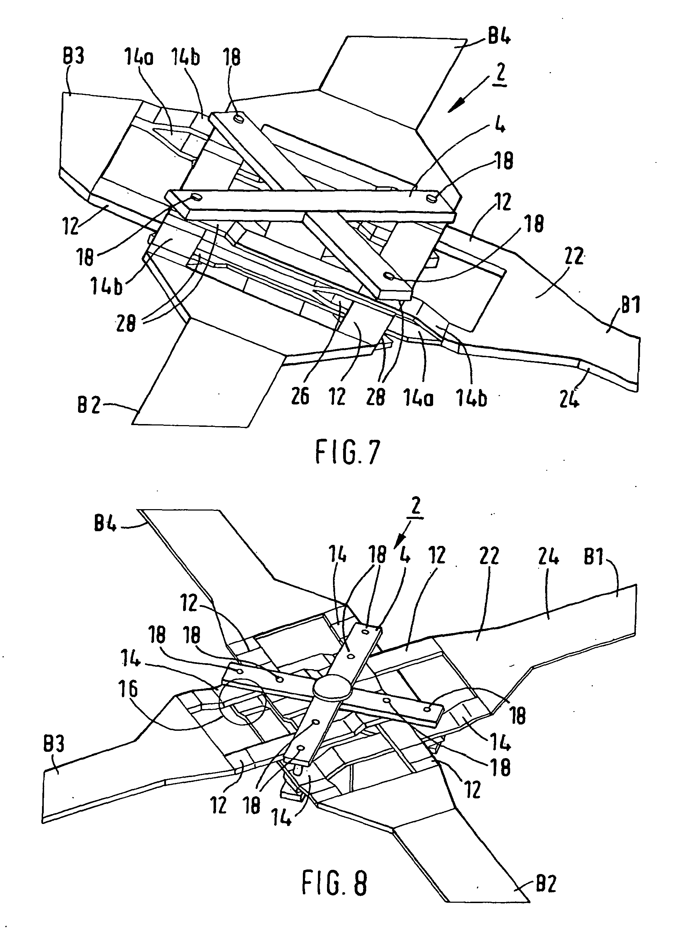

In der Fig. 6 ist in einer schematischen Perspektivansicht ein Blattanschlussbereich eines Rotorblattes B1 eines erfindungsgemäßen Rotors gemäß einer fünften Ausführungsform dargestellt. Fig. 7 zeigt eine schematische, perspektivische Draufsicht auf den erfindungsgemäßen Rotor gemäß der fünften Ausführungsform. Wie besonders aus Fig. 6 ersichtlich, ist bei den Rotorblättern B1 , B2, B3, B4 dieses Rotors einer der beiden Anschlussarme 12, 14 in zwei übereinanderliegende Anschlussarmstränge 14 a, 14b unterteilt, die in einem Abstand zueinander verlaufen. Die Anschlussarmstränge 14a, 14b sind also gewissermaßen übereinander geschichtet. Die freie Enden der Anschlussarmstränge 14a, 14b sind nach oben und unten abgewinkelt bzw. abgestuft und bilden zusammen eine Art Anschlussklaue 28 aus. Das freie Ende des anderen, ungeteilten Anschlussarms 12 ist wiederum in Form eines Gabelterminals 26 ausgestaltet.

Im montierten Zustand der Rotorblätter (siehe Fig. 7) greift von einem ersten Rotorblattpaar jeweils ein Gabelterminal 26 eines Rotorblattes B1, B2, B3, B4 in Längsrichtung zwischen die übereinanderliegenden Anschlussarmstränge 14a, 14b des genau gegenüberliegenden Rotorblattes. Und von den Rotorblättern des um 90° versetzten zweiten Rotorblattpaares verläuft ein streifenförmiger Armabschnitt des ungeteilten Anschlussarms 12 durch das zwischen den Anschlussarmsträngen 14a, 14b befindliche Gabelterminal 26 hindurch. Und die Anschlussklaue 28 des diesem Armabschnitt gegenüberliegenden Anschlussarms 14 (der zwei Anschlussarmstränge 14a, 14b besitzt), greift über den oberen und unteren Anschlussstrang des Rotorblattes des ersten Rotorblattpaars. Diese Anordnung ist an allen Schlag-Hilfsgelenken H1, H2 gleich.

Die zuvor beschriebene Variante dient einer besseren Symmetrie der Rotorblattanschlüsse und reduziert die Anschlusssteifigkeit und damit die Schlagsteifigkeit des jeweiligen Rotorblattes. Dies ist primär durch die in Schlagrichtung insgesamt kleinere Biegesteifigkeit der einzelnen Anschlussarmstränge 14a, 14b sowie die daraus resultierende geringere Gesamt-Biegesteifigkeit des Anschlussarms 14 bedingt. Ein ungeteilter Anschlussarm besitzt im Vergleich dazu eine weitaus höhere Biegesteifigkeit.

Fig. 8 zeigt eine schematische, perspektivische Draufsicht auf einen erfindungsgemäßen Rotor gemäß einer sechsten Ausführungsform. Diese Variante ähnelt weitgehend denen der Fig. 1 , 4 und 7. Wie man in der Zeichnung gemäß Fig. 8 jedoch deutlich erkennt, sind hier die Anschlussarme 12, 14 der einander gegenüberliegenden Rotorblätter B1, B3; B2, B4 eines Rotorblattpaares seitlich nebeneinander versetzt angeordnet. In einem jeweiligen Überkreuzungs- bzw. Überlappungsbereich 16 der Anschlussarme 12, 14 aller Rotorblätter B1, B2, B3, B4 liegen daher stets nur zwei Anschlussarme 12, 14 übereinander. Diese Bauweise bedingt ferner, dass zur Verbindung aller Anschlussarme 12, 14 untereinander und mit dem Rotorstern 4 sowie zur Drehmomentenübertragung vom Rotorstern 4 auf die Rotorblätter B1, B2, B3, B4 insgesamt acht Lagerstellen bzw. Bolzen 18 erforderlich sind. Ferner liegt bei dieser Variante liegt ein Anschlussarm 12 in der gleichen Ebene mit dem trapezförmigen Basisabschnitt 22 und dem distalen streifenförmigen Blatthalsbereich 24. Der andere Anschlussarm 14 ist gegenüber dieser Ebene in mehreren Abschnitten nach unten (nach oben ist ebenfalls möglich) abgewinkelt bzw. abgestuft. Vorteil dieser Ausführungsform ist eine niedrigere Bauhöhe im Überlappungs- bzw. Überkreuzungsbereich 16 sowie eine daraus resultierende größere Biegeweichheit, sprich ein weicheres Schlagverhalten der Rotorblätter B1, B2, B3, B4.

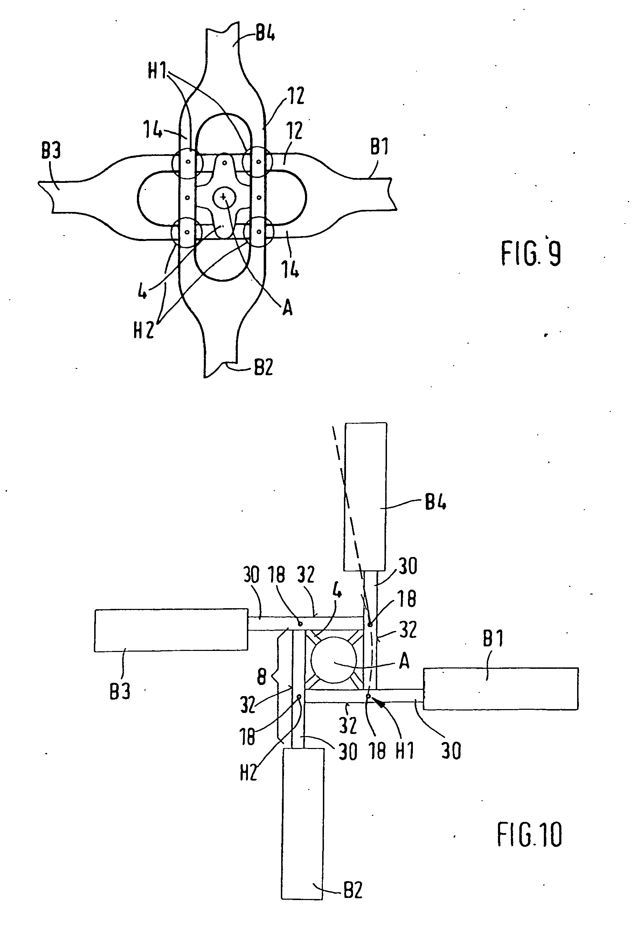

Fig. 9 zeigt eine schematische, perspektivische Draufsicht auf einen erfindungsgemäßen Rotor gemäß einer siebten Ausführungsform. Bei dieser Variante, bei der sich jeweils zwei Rotorblätter B1, B3; B2, B4 um 180° versetzt genau gegenüberliegen, sind die jeweiligen Anschlussarme 12, 14 dieser Rotorblätter B1, B2, B3, B4 durchgehend, d.h. ohne Unterbrechung ausgestaltet. Dadurch ist der durch die Anschlussarme 12, 14 gebildete Fliehkraftstrang ebenfalls durchgehend. Das hat den Vorteil, dass die beträchtlichen Fliehkräfte eines Rotorblattes (z.B. B1) direkt durch das gegenüberliegende Rotorblatt (z.B. B3) abgesetzt werden können. Gleichzeitig verfügt das jeweilige Rotorblattpaar B1, B3; B2, B4 über zwei gemeinsame Schlag-Hilfsgelenke H1, H2 und ein gemeinsames oder unterschiedliches virtuelles Schlag-Gelenk.

Der schlagweiche Anschluss der Rotorblätter B1, B2, B3, B4 ergibt sich dann wiederum dadurch, dass sich die Anschlussarme 12, 14 zwischen den Schlag-Hilfsgelenken H1, H2 noch einmal durchbiegen können. Dies führt im Anschlussbereich zu einer größeren Weichheit. Ferner ist diese Konstruktion sehr flach. Gegenüber den weiter oben erläuterten Beispielen greifen die Befestigungspunkte des Rotorsterns 4 nicht direkt an den Schlag-Hilfsgelenken H 1, H2, sondern an einer dazu um 45° verdrehten Position an. Diese liegt jeweils an einem mittleren Abschnitt eines Strangs des betreffenden Anschlussarms 12, 14 eines jeweiligen Rotorblattpaares B1, B3; B2, B4.

Fig. 10 zeigt eine schematische, perspektivische Draufsicht auf einen erfindungsgemäßen Rotor gemäß einer achten Ausführungsform. Der Rotor besitzt vier Rotorblätter B1, B2, B3, B4. Bei dieser Variante weist das jeweilige Rotorblatt keine Blattanschlussgabel mit mindestens zwei Anschlussarmen, sondern nur jeweils einen einzelnen Blattanschlussarm 30 auf. Dieser ist in diesem Fall sowohl in Schlag- als auch in Schwenkrichtung biegeweich ausgeführt. Wie in der Zeichnung deutlich zu erkennen ist, erstreckt sich der einzelne Blattanschlussarm 30 eines jeweiligen Rotorblattes B1, B2, B3, B4 seitlich neben der Rotorachse A her und an dieser vorbei. Mit einem Endbereich ist der einzelne Blattanschlussarm 30 eines Rotorblattes B1, B2, B3, B4 jeweils mit einem Zwischenabschnitt 32 eines Blattanschlussarms 30 eines jeweils benachbarten, gleichartig ausgestalteten Rotorblattes B1, B2, B3, B4 verbunden. Dies erfolgt wie in den vorangegangenen Beispielen mit jeweils einem Bolzen 18. Die zwischen den Bolzen 18 befindlichen Abschnitte der jeweiligen einzelnen Blattanschlussarme 30 bilden um die Rotorachse A bzw. den Rotormast 6 ein Viereck.

Aufgrund der zuvor beschriebenen Ausgestaltungsweise ergeben sich somit pro Rotorblatt B1, B2, B3, B4 zwei in Längsrichtung des Rotorblattes voneinander beabstandeten Befestigungsstellen. Diese Befestigungsstellen, an denen auch die Arme des Rotorsterns 4 angreifen, stellen jeweils zwei Schlag-Hilfsgelenke H1, H2 dar, zwischen denen das virtuelle Schlaggelenk angeordnet ist und zwischen denen der Blatthals 8 bei einer Schlagbewegung biegeelastisch und bogenförmig deformierbar ist. Weil der jeweilige einzelne Blattanschlussarm 30 auch in Schwenkrichtung biegeweich ist, bilden die zwei Schlag-Hilfsgelenke H1, H2 eines jeweiligen Rotorblattes B1, B2, B3, B4 gleichzeitig auch zwei in radialer Längsrichtung des Rotorblattes voneinander beabstandete Schwenk-Hilfsgelenke, zwischen denen ein virtuelles Schwenkgelenk angeordnet ist und zwischen denen der Blatthals 8 bei einer Schwenkbewegung des Rotorblatts B1, B2, B3, B4 biegeelastisch und bogenförmig deformierbar ist.

Die Bolzen 18 an den Verbindungsstellen der Rotorblätter B1, B2, B3, B4 dienen hierbei gleichzeitig als Drehgelenkpunkte, welche die Biegung des betreffenden einzelnen Blattanschlussarms 30 in der Schlagrichtung erleichtern. In der Fig. 10 ist ein geschwenktes Rotorblatt durch eine gestrichelte Linien angedeutet. Dieser Rotor ist im Gegensatz zu den zuvor beschriebenen Ausführungsformen schwenkweich und daher für Kipprotorhubschrauber weniger geeignet.

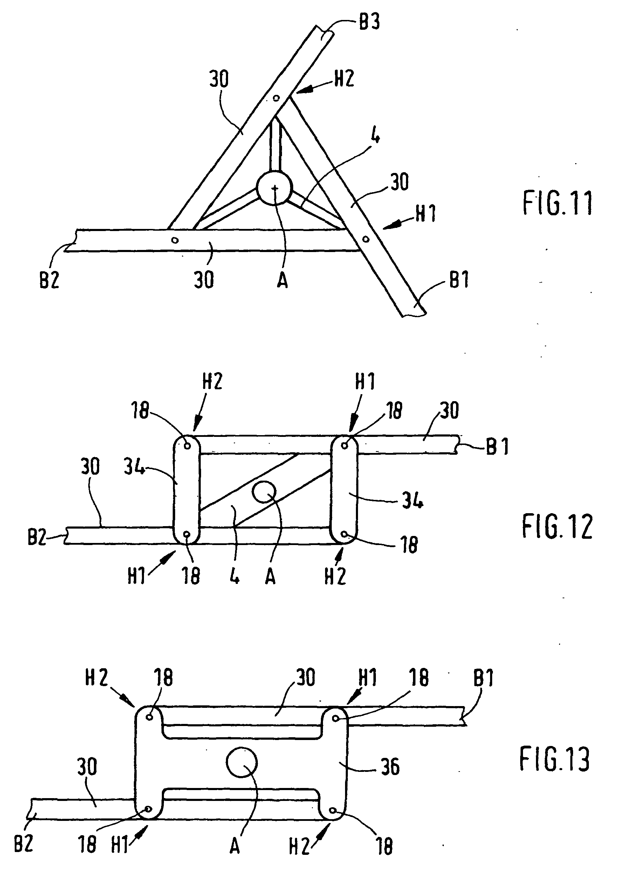

Fig. 11 zeigt in einer schematischen Draufsicht einen erfindungsgemäßen Rotor gemäß einer neunten Ausführungsform. Dies Variante entspricht im Wesentlichen der von Fig. 10, jedoch ist sie als Dreiblatt-Rotor ausgeführt. Die zwischen den Bolzen 18 befindlichen Abschnitte der jeweiligen einzelnen Blattanschlussarme 30 bilden um die Rotorachse A bzw. den Rotormast ein gleichseitiges Dreieck.

Fig. 12 und 13 zeigen schematische Draufsichten auf einen erfindungsgemäßen Rotor gemäß einer zehnten und elften Ausführungsform. Die Variante entspricht im Wesentlichen denen von Fig. 10 und 11, jedoch ist sie als Zweiblatt-Rotor ausgestaltet. Dies erfordert beispielweise zwei die einzelnen Blattanschlussarme 30 miteinander verbindende zusätzliche Querverbindungselemente 34 (siehe Fig. 12) zur drehfesten Anbringung der Rotorblätter B1, B2 an den Rotormast 6 oder eine oder mehrere übereinanderliegende Rotorkopfplatten 36 mit geeigneten, voneinander beabstandeten Befestigungspunkten (siehe Fig. 13).

Die in den vorangegangenen Ausführungsbeispielen beschriebenen erfindungsgemäßen Rotoren kommen vorzugsweise bei einem Drehflügelflugzeug, insbesondere einem Hubschrauber mit einem oder mehreren Rotoren zum Einsatz. Hierbei eignen sich die Varianten nach den Fig. 1 und 3 bis 10 aufgrund einer hohen Schwenksteifigkeit besonders für Kipprotorhubschrauber bzw. Kipprotorflugzeuge.

Die Erfindung ist nicht auf die obigen Ausführungsbeispiele, die lediglich der allgemeinen Erläuterung des Kerngedankens der Erfindung dienen, beschränkt. Im Rahmen des Schutzumfangs kann der erfindungsgemäße Rotor vielmehr auch andere als die oben konkret beschriebenen Ausgestaltungsformen annehmen. Der Rotor kann hierbei insbesondere Merkmale aufweisen, die eine Kombination aus den Merkmalen der beschriebenen Ausführungsformen darstellen. Obwohl in den Ausführungsbeispielen nur mehrblättrige Rotoren erörtert wurden, ist das erfindungsgemäße Prinzip auch auf einblättrige Rotoren bzw. Rotoren mit 1 bis n (1...n) Rotorblättern anwendbar. Bei einem erfindungsgemäßen Rotor können das virtuelle Schlag- und Schwenkgelenk überdies zusammenfallen. Die Schlag-Hilfsgelenke sind auch als räumliche Gelenke ausführbar, die reale und/oder virtuelle Gelenke aufweisen können.

Bei dem erfindungsgemäßen Rotor kann der Rotormast in Abhängigkeit der jeweiligen Rotorkopfausgestaltung und der jeweiligen Rotormastanbindung in axialer Richtung auch unterhalb der Rotorblattebene bzw. unterhalb der Anschlussarme enden. Die Anschlussarme können sich dann jedoch weiterhin seitlich neben der Rotorachse her bzw. um diese herum erstrecken. Ferner ist es im Sinne der Erfindung denkbar, den Basisabschnitt 22 sehr schmal auszugestalten, und die Anschlussarme in einem nur sehr geringen seitlichen Abstand nebeneinander verlaufen zu lassen. Des weiteren ist es möglich, einen Bereich zwischen den Anschlussarmen mit einer weichen, elastischen Zwischenfüllung, z.B. einem elastischen Schaumstoff oder dergleichen, zu versehen, der die Verformung der Anschlussarme nicht behindert und zusätzlich auch Verkleidungs-, Stütz- oder Aussteifungsfunktionen übernehmen kann.

Auch kann anstelle der Bolzen grundsätzlich ein anderes geeignetes Verbindungsmittel bzw. Fliehkraftabtragungselement eingesetzt werden, so zum Beispiel eine integrale Verbindung zwischen den jeweiligen Anschlussarmen und/oder dem Rotorstern oder der Rotorkopfplatte oder eine um den Rotormast und/oder eine Rotorkopfplatte geschlungene Rotorblatt-Anschluss-Schlaufe. Die Schlaufe kann besonders einfach dadurch realisiert werden, dass die zwei Anschlussarme der Blattanschlussgabel z.B. hinter dem Rotormast zu einer Schlaufe zusammengeführt und integral miteinander verbunden werden.

Bei den obigen Beispielen übernehmen die im Bereich der Schlag-Hilfsgelenke angeordneten Bolzen eine Mehrfachfunktion. Insbesondere bilden Sie in Verbindung mit den sich jeweils überlappenden bzw. überkreuzenden Blattanschlussbereichen die Schlag-Hilfsgelenke und nehmen gleichzeitig die an den Rotorblättern wirkenden Fliehkräfte auf. Es ist jedoch möglich, diese einzelnen Funktionen zu trennen. So ist es beispielsweise denkbar, dass ein jeweiliges Schlag-Hilfsgelenk fliehkraftfrei und bolzenlos ausgestaltet ist und durch eine den Blatthals abstützende Stützeinrichtung in Zusammenwirkung mit den biegeweichen Anschlussarmen gebildet wird. Als Stützeinrichtung können beispielweise Abstützelemente oder Klemmelemente an der Ober- und Unterseite des Blatthalses dienen. Diese können z.B. in Form von Stützrollen, balligen Auflagerelementen, elastischen Klemmelementen und dergleichen ausgestaltet sein. Ein solches Schlag-Hilfsgelenk kann keine Fliehkräfte aufnehmen. Diese sind beispielsweise aber durch einen Bolzen kompensierbar, der nur noch fliehkraftabtragend wirkt, jedoch keine Funktionen des Schlag-Hilfsgelenks mehr übernimmt. Hierbei ist es möglich, die Bolzenachse nicht vertikal, sondern auch horizontal oder in einem Winkel relativ zur Rotorkreisebene anzuordnen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Rotorkopf
- 4: Rotorstern
- 6: Rotormast
- 8: Biege- und schlagweicher Blatthats
- 10: Blattanschlussgabel
- 12: Anschlussarm von 10
- 14: Anschlussarm von 10
- 14a: Anschlussarmstrang von 14
- 14b: Anschlussarmstrang von 14
- 16: Überkreuzungs- bzw. Überlappungsbereich
- 18: Bolzen
- 20: Zusätzlicher biegeweicher, schlagweicher Blatthalsabschnitt
- 22: Basisabschnitt
- 24: Distaler Blatthalsbereich
- 26: Gabelterminal
- 28: Anschlussklaue
- 30: Einzelner Blattanschlussarm
- 32: Zwischenabschnitt von 30
- 34: Querverbindungselement
- 36: Rotorkopfplatte(n)

- 142: Strukturelement
- 144: Rotorkopfseitiger Blattanschluss
- 146: Blatthals
- 148: Bolzen
- 150: Steuertüte

- A: Rotorachse
- B1: Rotorblatt
- B2: Rotorblatt
- B3: Rotorblatt
- B4: Rotorblatt
- B5: Rotorblatt
- H1: Schlag-Hilfsgelenk
- H1a: Gelenkbereich von H1
- H1b: Gelenkbereich von H1
- H2: Schlag-Hilfsgelenk
- H2a: Gelenkbereich von H1
- H2b: Gelenkbereich von H 1
- DS: Scheinbarer Schlaggelenkabstand
- R: Rotorradius

## Patentansprüche

1. Rotor, umfassend
- mindestens zwei an einen Rotorkopf (2) anschließbare Rotorblätter (B1, B2, B3, B4; B5),
- welche jeweils über einen Blatthals (8) mit einem virtuellen Schlaggelenk in Form eines biegeweichen, biegeelastischen Blatthalsabschnitts verfügen,
- wobei in einem Blattanschlussbereich (12, 14; 16; 30, 32) des Blatthalses (8) zwei bezogen auf einen Rotorradius (R) in radialer Längsrichtung des Rotorblattes (B1, B2, B3, B4; B5) voneinander beabstandete Schlag-Hilfsgelenke (H1, H2) vorgesehen sind, zwischen denen im Wesentlichen das virtuelle Schlaggelenk angeordnet ist und zwischen denen der Blatthals (8) bei einer Schlagbewegung biegeelastisch und bogenförmig deformierbar ist,
**dadurch gekennzeichnet, dass**
- der die zwei Schlag-Hilfsgelenke (H1, H2) sowie das dazwischen liegende virtuelle Schlaggelenk enthaltende Blattanschlussbereich des Blatthalses eines jeweiligen Rotorblatts (B1, B2, B3, B4, B5) in Form eines Blattanschlussarms (12, 14, 14a, 14b; 30) ausgebildet ist;
- die Rotorblätter (B1, B2, B3, B4, B5) über ihre Blattanschlussarme (12, 14; 30) miteinander verbunden sind;
- sich die Blattanschlussarme (12, 14, 14a, 14b; 30) der miteinander verbundenen Rotorblätter (B1, B2, B3, B4, B5) zumindest in Teilbereichen überlappen (16), und
- ein jeweiliges Schlag-Hilfsgelenk (H1, H2) in dem Überlappungsbereich (16) der Anschlussarme (12, 14, 14a, 14b; 30) liegt.

2. Rotor nach Anspruch 1,
**dadurch gekennzeichnet, dass**
der Blatthals (8) an einem Bereich, der sich bezogen auf den Rotorradius (R) und die Längsrichtung des Rotorblattes (B1, B2, B3, B4; B5) an das radial äußere der beiden Schlag-Hilfsgelenke (H1, H2) in Richtung zu einer Rotorblattspitze hin anschließt, einen weiteren biegeweichen, insbesondere schlagweichen Blatthalsbereich (22) besitzt.

3. Rotor nach Anspruch 1 oder 2,
**dadurch gekennzeichnet, dass**
dieser ein gelenkloser Rotor ist, der zusätzlich zu dem virtuellen Schlaggelenk ein virtuelles Schwenkgelenk in Form eines biegeweichen, biegeelastischen Blatthalsbereiches (30) besitzt.

4. Rotor nach einem oder mehreren der vorhergenannten Ansprüche,
**dadurch gekennzeichnet, dass**
dieser ein lager- und gelenkloser Rotor ist, mit einem virtuellen Schlaggelenk, einem virtuellen Schwenkgelenk und einem drillweichen Blatthals (12, 14, 22, 24) für eine lagerlose Blattwinkelverstellung.

5. Rotor nach einem oder mehreren der vorhergenannten Ansprüche,
**dadurch gekennzeichnet, dass**
der Schlagsgelenkabstand größer gleich Null ist.

6. Rotor nach einem oder mehreren der vorhergenannten Ansprüche,
**dadurch gekennzeichnet, dass**
der Schlagsgelenkabstand kleiner Null, also negativ ist.

7. Rotor nach Anspruch 3 oder 4,
**dadurch gekennzeichnet, dass**
sich das virtuelle Schwenkgelenk in einem Bereich des Blatthalses (8) zwischen den beiden Schlag-Hilfsgelenken (H 1, H2) befindet.

8. Rotor nach einem der Ansprüche 3, 4 oder 7,
**dadurch gekennzeichnet, dass**
die zwei Schlag-Hilfsgelenke (H1, H2) gleichzeitig zwei in radialer Längsrichtung des Rotorblattes (B1, B2, B3, B4) voneinander beabstandete Schwenk-Hilfsgelenke bilden, zwischen denen das virtuelle Schwenkgelenk angeordnet ist und zwischen denen der Blatthals (8; 30) bei einer Schwenkbewegung des Rotorblatts (B1, B2, B3, B4) biegeelastisch und bogenförmig deformierbar ist.

9. Rotor nach einem der Ansprüche 3, 4, 7 oder 8,
**dadurch gekennzeichnet, dass**
das Schwenkgelenk schwenksteif ausgebildet ist.

10. Rotor nach einem oder mehreren der vorhergenannten Ansprüche,
**dadurch gekennzeichnet, dass**
mindestens eines der Schlag-Hilfsgelenke (H1, H2) ein Drehgelenk (18) aufweist.

11. Rotor nach einem oder mehreren der vorhergenannten Ansprüche,
**dadurch gekennzeichnet, dass**
mindestens eines der Schlag-Hilfsgelenke (H1, H2) durch einen biegeweichen, biegeelastischen Abschnitt (12, 14, 14a, 14b) des Blatthalses (8) gebildet ist.

12. Rotor nach einem oder mehreren der vorhergenannten Ansprüche,
**dadurch gekennzeichnet, dass**
mindestens eines der Schlag-Hilfsgelenke (H1, H2) durch eine den Blatthals (8) im Bereich des Schlag-Hilfsgelenks (H1, H2) abstützenden Stützeinrichtung gebildet ist.

13. Rotor nach einem oder mehreren der vorhergenannten Ansprüche,
**dadurch gekennzeichnet, dass**
die mindestens zwei Rotorblätter (B1, B2, B3, B4; B5) über gemeinsame Schlag-Hilfsgelenke (H1, H2) verfügen, die in einem gemeinsamen Blatthalsverbindungsbereich (16, 18) liegen.

14. Rotor nach einem oder mehreren der vorhergenannten Ansprüche, mit mindestens zwei Rotorblättern (B1, B3; B2, B4), die sich bezogen auf den Rotorkreis jeweils um ca. 180° versetzt gegenüber liegen und ein Rotorblattpaar (B1, B3; B2, B4) bilden,
**dadurch gekennzeichnet, dass**
das jeweilige Rotorblattpaar (B1, B3; B2, B4) über zwei gemeinsame Schlag-Hilfsgelenke (H1, H2) und ein gemeinsames virtuelles Schlag-Gelenk verfügt.

15. Rotor nach einem oder mehreren der vorhergenannten Ansprüche,
**dadurch gekennzeichnet, dass**
- der die zwei Schlag-Hilfsgelenke (H1, H2) sowie das dazwischen liegende virtuelle Schlaggelenk enthaltende Blattanschlussbereich des Blatthalses eines jeweiligen Rotorblatts (B1, B2, B3, B4) in Form eines einzelnen Blattanschlussarms (30) ausgebildet ist,
- sich der einzelne Blattanschlussarm (30) eines jeweiligen Rotorblattes (B1, B2, B3, B4) seitlich neben der Rotorachse (A) her und an dieser vorbei erstreckt und mit einem Zwischenabschnitt (32) eines jeweils benachbarten, gleichartig ausgestalteten Rotorblattes (B1, B2, B3, B4) verbunden ist.

16. Rotor nach einem oder mehreren der vorhergenannten Ansprüche,
**dadurch gekennzeichnet, dass**
der die zwei Schlag-Hilfsgelenke (H1, H2) sowie das dazwischen liegende virtuelle Schlaggelenk enthaltende Blattanschlussbereich des Blatthalses (8) in Form einer Blattanschlussgabel (10) mit mindestens zwei fliehkraftabtragenden Anschlussarmen (12, 14) ausgebildet ist.

17. Rotor nach einem oder mehreren der vorhergenannten Ansprüche,
**dadurch gekennzeichnet, dass**
sich bei einer Blickrichtung auf die Rotorkreisebene die Rotorachse (A) zwischen den mindestens zwei Anschlussarmen (12, 14) erstreckt.

18. Rotor nach einem oder mehreren der vorhergenannten Ansprüche,
**dadurch gekennzeichnet, dass**
von den mindestens zwei Anschlussarmen (12, 14, 14a, 14b) eines Rotorblatts (B1, B2, B3, B4, B5) mindestens einer ein als ein Gabelterminal (26) ausgebildetes Armende besitzt, das im Bereich eines Schlag-Hilfsgelenkes (H1, H2) angreift und mit einem Anschlussarm-Bereich eines Anschlussarms (12, 14) eines jeweils anderen Rotorblatts (B1, B2, B3, B4, B5) verbunden (18) ist.

19. Rotor nach einem oder mehreren der vorhergenannten Ansprüche,
**dadurch gekennzeichnet, dass**
mindestens ein Anschlussarm (14) in mindestens zwei übereinanderliegende Anschlussarmstränge (14a, 14b) unterteilt ist.

20. Rotor nach einem der Ansprüche 16 bis 19,
**dadurch gekennzeichnet, dass**
die Rotorblätter (B1, B2, B3, B4, B5) über ihre Blattanschlussgabeln (10) miteinander verbunden sind und mindestens ein Teilbereich (12, 14; 14a, 14b) der Blattanschlussgabel (10) des jeweils einen Rotorblattes (B1, B2, B3, B4, B5) Fliehkräfte des jeweils anderen Rotorblattes (B1, B2, B3, B4, B5) aufnimmt.

21. Rotor nach einem der Ansprüche 16 bis 20,
**dadurch gekennzeichnet, dass**
sich die Anschlussarme (12, 14) der über ihre Blattanschlussgabeln (10) miteinander verbunden Rotorblätter (B1, B2, B3, B4, B5) zumindest in Teilbereichen überlappen (16).

22. Rotor nach einem der Ansprüche 16 bis 21,
**dadurch gekennzeichnet, dass**
sich die mindestens zwei Anschlussarme (12, 14) eines Rotorblattes (B1, B2, B3, B4, B5) in verschiedenen Ebenen erstrecken.

23. Rotor nach einem oder mehreren der vorhergenannten Ansprüche,
**dadurch gekennzeichnet, dass**
die Anschlussarme (12, 14; 14a, 14b) streifen- oder plattenförmig ausgebildet sind.

24. Rotor nach einem oder mehreren der vorhergenannten Ansprüche,
**dadurch gekennzeichnet, dass**
das mindestens eine Rotorblatt (B1, B2, B3, B4, B5) im Bereich der beiden Schlag-Hilfsgelenke (H1, H2) über ein Drehmomentenübertragungselement (4; 18) drehfest mit einem Rotormast (6) verbunden ist.

25. Rotor nach Anspruch 24,
**dadurch gekennzeichnet, dass**
das Drehmomentenübertragungselement (18) an einem Abschnitt (16) an den Rotorblättern (B1, B2, B3, B4, B5) angreift, an dem sich die Anschlussarme (12, 14) überlappen (16) und in dem mindestens eines der Schlag-Hilfsgelenke (H1, H2) liegt.

26. Rotor nach Anspruch 24 oder 25,
**dadurch gekennzeichnet, dass**
das Drehmomentenübertragungselement (4) in Schlagrichtung des mindestens einen Rotorblattes (B1, B2, B3, B4, B5) biegeweich ist.

27. Rotor nach einem oder mehreren der vorhergenannten Ansprüche,
**dadurch gekennzeichnet, dass**
das Rotorblatt (B1, B2, B3, B4, B5) in dem Blattanschlussbereich (12, 14; 16; 30) mindestens zwei in Längsrichtung bzw. Fliehkraftrichtung voneinander beabstandete Fliehkraftabtragungselemente (18) aufweist, von denen mindestens eines (18) im laufenden Betrieb des Rotors die am Rotorblatt (B1, B2, B3, B4, B5) auftretenden Fliehkräfte aufnimmt.

28. Rotor nach einem oder mehreren der vorhergenannten Ansprüche,
**dadurch gekennzeichnet, dass**
mindestens eines der beiden in Längsrichtung des Rotorblattes (B1, B2, B3, B4, B5) voneinander beabstandeten Schlag-Hilfsgelenke (H1, H2) oder Teile (18) davon als ein Fliehkraftabtragungselement ausgestaltet ist.

29. Rotor nach einem oder mehreren der vorhergenannten Ansprüche,
**dadurch gekennzeichnet, dass**
die Rotorblätter (B1, B2, B3, B4, B5) im Bereich Ihrer Schlag-Hilfsgelenke (H1, H2) miteinander verbunden sind und mindestens jeweils ein Schlag-Hilfsgelenk (H1, H2), oder ein Teil (18) davon, eines jeweiligen Rotorblattes (B1, B2, B3, B4, B5) als ein Fliehkraftabtragungselement für mindestens ein jeweils anderes Rotorblatt (B1, B2, B3, B4, B5) ausgebildet ist.

30. Drehflügelflugzeug, insbesondere ein Hubschrauber, insbesondere ein Kipprotorhubschrauber, mit mindestens einem Rotor nach einem oder mehreren der Ansprüche 1 bis 29.

## Claims

1. Rotor, comprising
- at least two rotor blades (B1, B2, B3, B4; B5) which can be connected to a rotor head (2),
- which each have a blade neck (8) with a virtual flapping hinge in the form of an easily bending, elastically flexible blade neck section,
- with two auxiliary flapping hinges (H1, H2), which are separated from one another in the radial longitudinal direction of the rotor blade (B1, B2, B3, B4; B5), with respect to a rotor radius (R), being provided in a blade connecting area (12, 14; 16; 30, 32) of the blade neck (8), between which the virtual flapping hinge is essentially arranged, and between which the blade neck (8) can be formed elastically flexibly and in the form of an arc during a flapping movement,
**characterized in that**
- the blade connecting area, which contains the two auxiliary flapping hinges (H1, H2) as well as the virtual flapping hinge located between them, of the blade neck of each rotor blade (B1, B2, B3, B4, B5) is in the form of a blade connecting arm (12, 14, 14a, 14b; 30);
- the rotor blades (B1, B2, B3, B4, B5) are connected to one another via their blade connecting arms (12, 14; 30);
- the blade connecting arms (12, 14, 14a, 14b; 30) of the rotor blades (B1, B2, B3, B4, B5) which are connected to one another overlap (16) at least in subareas, and
- each auxiliary flapping hinge (H1, H2) is located in the overlap area (16) of the connecting arms (12, 14, 14a, 14b; 30).

2. Rotor according to Claim 1,
**characterized in that**
the blade neck (8) has a further easily bending, in particular easily flapping, blade neck area (22) on an area which, with respect to the rotor radius (R) and the longitudinal direction of the rotor blade (B1, B2, B3, B4; B5), is adjacent to the radially outer of the two auxiliary flapping hinges (H1, H2) in the direction of a rotor blade tip.

3. Rotor according to Claim 1 or 2,
**characterized in that**
this rotor is a hingeless rotor which, in addition to the virtual flapping hinge, has a virtual pivoting hinge in the form of an easily bending, elastically flexible blade neck area (30).

4. Rotor according to one or more of the abovementioned claims,
**characterized in that**
this rotor is a rotor without any bearings and hinges, having a virtual flapping hinge, a virtual pivoting hinge and a blade neck (12, 14, 22, 24) which twists easily for blade angle adjustment without any bearings.

5. Rotor according to one or more of the abovementioned claims,
**characterized in that**
the flapping hinge distance is greater than or equal to zero.

6. Rotor according to one or more of the abovementioned claims,
**characterized in that**
the flapping hinge distance is less than to zero, that is to say is negative.

7. Rotor according to Claim 3 or 4,
**characterized in that**
the virtual pivoting hinge is located in an area of the blade neck (8) between the two auxiliary flapping hinges (H1, H2).

8. Rotor according to one of Claims 3, 4 or 7,
**characterized in that**
the two auxiliary flapping hinges (H1, H2) at the same time form two auxiliary pivoting hinges which are at a distance from one another in the radial direction of the rotor blade (B1, B2, B3, B4), between which the virtual pivoting hinge is arranged and between which the blade neck (8; 30) can be formed elastically flexibly and in the form of an arc during a pivoting movement of the rotor blade (B1, B2, B3, B4).

9. Rotor according to one of Claims 3, 4, 7 or 8,
**characterized in that**
the pivoting hinge is stiff to pivot.

10. Rotor according to one or more of the abovementioned claims,
**characterized in that**
at least one of the auxiliary flapping hinges (H1, H2) is a rotary hinge (18).

11. Rotor according to one or more of the abovementioned claims,
**characterized in that**
at least one of the auxiliary flapping hinges (H1, H2) is formed by an elastically flexible section (12, 14, 14a, 14b) of the blade neck (8) which bends easily.

12. Rotor according to one or more of the abovementioned claims,
**characterized in that**
at least one of the auxiliary flapping hinges (H1, H2) is formed by a supporting device which supports the blade neck (8) in the area of the auxiliary flapping hinge (H1, H2).

13. Rotor according to one or more of the abovementioned claims,
**characterized in that**
the at least two rotor blades (B1, B2, B3, B4; B5) have common auxiliary flapping hinges (H1, H2) which are allocated in a common blade neck connecting area (16, 18).

14. Rotor according to one or more of the abovementioned claims, having at least two rotor blades (B1, B3; B2, B4) which are each offset through approximately 180° with respect to the rotor circle and form a rotor blade pair (B1, B3; B2, B4),
**characterized in that**
the respective rotor blade pair (B1, B3; B2, B4) has two common auxiliary flapping hinges (H1, H2) and one common virtual flapping hinge.

15. Rotor according to one or more of the abovementioned claims,
**characterized in that**
- the blade connecting area, which contains the two auxiliary flapping hinges (H1, H2) as well as the virtual flapping hinge located in between them, of the blade neck of each rotor blade (B1, B2, B3, B4) is in the form of a single blade connecting arm (30),
- the individual blade connecting arm (30) of each rotor blade (B1, B2; B3, B4) extends at the side alongside the rotor axis (A) and past it, and is connected to an intermediate section (32) of a respectively adjacent, identically designed rotor blade (B1, B2; B3, B4).

16. Rotor according to one or more of the abovementioned claims,
**characterized in that**
the blade connecting area, which contains the two auxiliary flapping hinges (H1, H2) and the virtual flapping hinge located between them, of the blade neck (8) is in the form of a blade connecting fork (10) with at least two connecting arms (12, 14) which absorb centrifugal forces.

17. Rotor according to one or more of the abovementioned claims,
**characterized in that**,
looking in the direction of the rotor circle plane, the rotor axis (A) extends between the at least two connecting arms (12, 14).

18. Rotor according to one or more of the abovementioned claims,
**characterized in that**
at least one of the at least two connecting arms (12, 14, 14a, 14b) of a rotor blade (B1, B2, B3, B4, B5) has at least one arm end which is in the form of a fork terminal (26), acts in the area of an auxiliary flapping hinge (H1, H2) and is connected (18) to a connecting arm area of a connecting arm (12, 14) of every other rotor blade (B1, B2, B3, B4, B5).

19. Rotor according to one or more of the abovementioned claims,
**characterized in that**
at least one connecting arm (14) is subdivided into at least two connecting arm strands (14a, 14b) which are located one above the other.

20. Rotor according to one of Claims 16 to 19,
**characterized in that**
the rotor blades (B1, B2, B3, B4, B5) are connected to one another via their blade connecting forks (10), and at least one subarea (12, 14; 14a, 14b) of the blade connecting fork (10) of each rotor blade (B1, B2, B3, B4, B5) absorbs centrifugal forces of every other rotor blade (B1, B2, B3, B4, B5).

21. Rotor according to one of Claims 16 to 20,
**characterized in that**
the connecting arms (12, 14) of the rotor blades (B1, B2, B3, B4, B5) which are connected to one another via their blade connecting forks (10) overlap (16) at least in subareas.

22. Rotor according to one of Claims 16 to 21,
**characterized in that**
the at least two connecting arms (12, 14) of a rotor blade (B1, B2, B3, B4, B5) extend on different planes.

23. Rotor according to one or more of the abovementioned claims,
**characterized in that**
the connecting arms (12, 14; 14a, 14b) are in the form of strips or plates.

24. Rotor according to one or more of the abovementioned claims,
**characterized in that**
the at least one rotor blade (B1, B2, B3, B4, B5) is connected to a rotor mast (6), such that they rotate together, via a torque transmission element (4; 18) in the area of the two auxiliary flapping hinges (H1, H2).

25. Rotor according to Claim 24,
**characterized in that**
the torque transmission element (18) acts on a section (16) on the rotor blades (B1, B2, B3, B4, B5) on which the connecting arms (12, 14) overlap (16), and in which at least one of the auxiliary flapping hinges (H1, H2) is located.

26. Rotor according to Claim 24, or 25,
**characterized in that**
the torque transmission element (4) bends easily in the flapping direction of the at least one rotor blade (B1, B2, B3, B4, B5).

27. Rotor according to one or more of the abovementioned claims,
**characterized in that**
the rotor blade (B1, B2, B3, B4, B5), in he blade connecting area (12, 14; 16; 30) has at least two centrifugal-force absorption elements (18), which are separated from one another in the longitudinal direction or centrifugal-force direction, at least one (18) of which absorbs centrifugal forces which occur on the rotor blade (B1, B2, B3, B4, B5) during operation of the rotor.

28. Rotor according to one or more of the abovementioned claims,
**characterized in that**
at least one of the two auxiliary flapping hinges (H1, H2), which are separated from one another in the longitudinal direction of the rotor blade (B1, B2, B3, B4, B5) or parts (18) of it or them is or are in the form of a centrifugal-force absorption element.

29. Rotor according to one or more of the abovementioned claims,
**characterized in that**
the rotor blades (B1, B2, B3, B4, B5) are connected to one another in the area of their auxiliary flapping hinges (H1, H2), and at least one auxiliary flapping hinge (H1, H2), or a part (18) of it, of each rotor blade (B1, B2, B3, B4, B5) is in each case in the form of a centrifugal-force absorption element for at least one respective other rotor blade (B1, B2, B3, B4, B5).

30. Rotary-wing aircraft, in particular a helicopter, in particular a tilting rotor helicopter, having at least one rotor according to one or more of Claims 1 to 29.

## Revendications

1. Rotor comprenant
- au moins deux pales de rotor (B1, B2, B3, B4, B5) pouvant être raccordées à une tête de rotor (2),
- lesquelles disposent chacune d'un collet de pale (8) avec une articulation en battement virtuelle en forme de portion de collet de pale déformable en torsion, élastique en torsion,
- deux articulations en battement auxiliaires (H1, H2) espacées l'une de l'autre dans la direction longitudinale radiale de la pale de rotor (B1, B2, B3, B4, B5) par rapport à un rayon du rotor (R) étant prévues dans une région de raccordement de pale (12, 14 ; 16 ; 30, 32) du collet de pale (8), entre lesquelles est disposée essentiellement l'articulation en battement virtuelle et entre lesquelles le collet de pale (8) peut être déformé de manière élastique en torsion et en forme d'arc en cas de mouvement de battement,
**caractérisé en ce que**
- la région de raccordement de pale du collet de pale d'une pale de rotor respective (B1, B2, B3, B4, B5) contenant les deux articulations auxiliaires en battement (H1, H2) ainsi que l'articulation en battement virtuelle intermédiaire est réalisée sous forme de bras de raccordement de pale (12, 14, 14a, 14b ; 30) ;
- les pales du rotor (B1, B2, B3, B4, B5) sont connectées les unes aux autres par le biais de leurs bras de raccordement de pale (12, 14 ; 30) ;
- les bras de raccordement de pale (12, 14, 14a, 14b ; 30) des pales de rotor (B1, B2, B3, B4, B5) connectées les unes aux autres se chevauchent au moins dans des régions partielles (16), et
- une articulation auxiliaire en battement respective (H1, H2) se situe dans la région de chevauchement (16) des bras de raccordement (12, 14, 14a, 14b ; 30).

2. Rotor selon la revendication 1,
**caractérisé en ce que**
le collet de pale (8) présente une autre région de collet de pale (22) déformable en torsion, en particulier déformable en battement, au niveau d'une région qui se raccorde à l'articulation auxiliaire en battement (H1, H2) radialement extérieure des deux articulations auxiliaires en battement dans la direction d'une pointe de pale de rotor, par rapport au rayon du rotor (R) et à la direction longitudinale de la pale de rotor (B1, B2, B3, B4, B5).

3. Rotor selon la revendication 1 ou 2,
**caractérisé en ce qu'**il
s'agit d'un rotor sans articulation, qui possède en plus de l'articulation en battement virtuelle une articulation en traînée virtuelle en forme de région de collet de pale (30) déformable en torsion, élastique en torsion.

4. Rotor selon l'une quelconque ou plusieurs des revendications précédentes,
**caractérisé en ce qu'**il
s'agit d'un rotor sans palier et sans articulation, avec une articulation en battement virtuelle, une articulation en traînée virtuelle et un collet de pale déformable en torsion (12, 14, 22, 24) pour un réglage sans palier de l'angle de pale.

5. Rotor selon l'une quelconque ou plusieurs des revendications précédentes,
**caractérisé en ce que**
la distance à l'articulation en battement est supérieure ou égale à zéro.

6. Rotor selon l'une quelconque ou plusieurs des revendications précédentes,
**caractérisé en ce que**
la distance à l'articulation en battement est inférieure à zéro, c'est-à-dire négative.

7. Rotor selon la revendication 3 ou 4,
**caractérisé en ce que**
l'articulation en traînée virtuelle se trouve dans une région du collet de pale (8) entre les deux articulations auxiliaires en battement (H1, H2).

8. Rotor selon l'une quelconque des revendications 3, 4 ou 7,
**caractérisé en ce que**
les deux articulations auxiliaires en battement (H1, H2) forment simultanément deux articulations auxiliaires en traînée espacées l'une de l'autre dans la direction longitudinale radiale de la pale de rotor (B1, B2, B3, B4), entre lesquelles l'articulation en traînée virtuelle est disposée et entre lesquelles le collet de pale (8 ; 30) peut être déformé de manière élastique en torsion et en forme d'arc en cas de mouvement de traînée de la pale du rotor (B1, B2, B3, B4).

9. Rotor selon l'une quelconque des revendications 3, 4, 7 ou 8,
**caractérisé en ce que**
l'articulation en traînée est réalisée de manière rigide en traînée.

10. Rotor selon l'une quelconque ou plusieurs des revendications précédentes,
**caractérisé en ce qu'**
au moins l'une des articulations auxiliaires en battement (H1, H2) présente une articulation rotative (18).

11. Rotor selon l'une quelconque ou plusieurs des revendications précédentes,
**caractérisé en ce qu'**
au moins l'une des articulations auxiliaires en battement (H1, H2) est formée par une portion déformable en torsion, élastique en torsion (12, 14, 14a, 14b) du collet de pale (8).

12. Rotor selon l'une quelconque ou plusieurs des revendications précédentes,
**caractérisé en ce qu'**
au moins l'une des articulations auxiliaires en battement (H1, H2) est formée par un dispositif de support supportant le collet de pale (8) dans la région de l'articulation auxiliaire en battement (H1, H2).

13. Rotor selon l'une quelconque ou plusieurs des revendications précédentes,
**caractérisé en ce que**
les au moins deux pales de rotor (B1, B2, B3, B4, B5) disposent d'articulations auxiliaires en battement communes (H1, H2) qui se situent dans une région de connexion commune du collet de pale (16, 18).

14. Rotor selon l'une quelconque ou plusieurs des revendications précédentes,
comprenant au moins deux pales de rotor (B1, B3 ; B2, B4) qui se situent par rapport au cercle du rotor de manière décalée respectivement d'environ 180° l'une par rapport à l'autre et qui forment une paire de pales de rotor (B1, B3 ; B2, B4),
**caractérisé en ce que**
la paire de pales de rotor respectives (B1, B3 ; B2, B4) dispose de deux articulations auxiliaires en battement communes (H1, H2) et d'une articulation en battement virtuelle commune.

15. Rotor selon l'une quelconque ou plusieurs des revendications précédentes,
**caractérisé en ce que**
- la région de raccordement de pale du collet de pale d'une pale de rotor respective (B1, B2, B3, B4) contenant les deux articulations auxiliaires en battement (H1, H2) ainsi que l'articulation en battement virtuelle située entre elles est réalisée sous forme de bras de raccordement de pale unique (30),
- le bras de raccordement de pale unique (30) de chaque pale de rotor (B1, B2, B3, B4) s'étend latéralement à côté de l'axe du rotor (A) et devant celui-ci et est connecté à une portion intermédiaire (32) d'une pale de rotor respective voisine de configuration similaire (B1, B2, B3, B4).

16. Rotor selon l'une quelconque ou plusieurs des revendications précédentes,
**caractérisé en ce que**
la région de raccordement de pale du collet de pale (8) contenant les deux articulations auxiliaires en battement (H1, H2) ainsi que l'articulation en battement virtuelle située entre elles est réalisée sous forme de fourche de raccordement de pale (10) avec au moins deux bras de raccordement (12, 14) dissipant la force centrifuge.

17. Rotor selon l'une quelconque ou plusieurs des revendications précédentes,
**caractérisé en ce que**
l'axe du rotor (A) s'étend entre les aux moins deux bras de raccordement (12, 14) en regardant en direction du plan du cercle du rotor.

18. Rotor selon l'une quelconque ou plusieurs des revendications précédentes,
**caractérisé en ce que**
sur les au moins deux bras de raccordement (12, 14, 14a, 14b) d'une pale de rotor (B1, B2, B3, B4, B5) au moins un possède une extrémité de bras réalisée sous la forme d'une terminaison de fourche (26), qui vient en prise dans la région d'une articulation auxiliaire en battement (H1, H2) et qui est connectée à une région de bras de raccordement (18) d'un bras de raccordement (12, 14) d'une autre pale de rotor respective (B1, B2, B3, B4, B5).

19. Rotor selon l'une quelconque ou plusieurs des revendications précédentes,
**caractérisé en ce qu'**
au moins un bras de raccordement (14) est divisé en au moins deux tronçons de bras de raccordement superposés (14a, 14b).

20. Rotor selon l'une quelconque des revendications 16 à 19,
**caractérisé en ce que**
les pales de rotor (B1, B2, B3, B4, B5) sont connectées les unes aux autres par le biais de leurs fourches de raccordement de pales (10) et au moins une région partielle (12, 14 ; 14a, 14b) de la fourche de raccordement (10) de chaque pale de rotor (B1, B2, B3, B4, B5) reçoit les forces centrifuges de l'autre pale de rotor respective (B1, B2, B3, B4, B5).

21. Rotor selon l'une quelconque des revendications 16 à 20,
**caractérisé en ce que**
les bras de raccordement (12, 14) des pales de rotor (B1, B2, B3, B4, B5) connectées les unes aux autres par le biais de leurs fourches de raccordement de pale (10) se chevauchent au moins dans des régions partielles (16).

22. Rotor selon l'une quelconque des revendications 16 à 21,
**caractérisé en ce que**
les au moins deux bras de raccordement (12, 14) d'une pale de rotor (B1, B2, B3, B4, B5) s'étendent dans des plans différents.

23. Rotor selon l'une quelconque ou plusieurs des revendications précédentes,
**caractérisé en ce que**
les bras de raccordement (12, 14 ; 14a, 14b) sont réalisés en forme de bandes ou de plaques.

24. Rotor selon l'une quelconque ou plusieurs des revendications précédentes,
**caractérisé en ce que**
l'au moins une pale de rotor (B1, B2, B3, B4, B5) est connectée dans la région des deux articulations auxiliaires en battement (H1, H2) par le biais d'un élément de transfert de couple (4 ; 18) de manière fixe en rotation à un mât de rotor (6).

25. Rotor selon la revendication 24,
**caractérisé en ce que**
l'élément de transfert de couple (18) vient en prise au niveau d'une portion (16) sur les pales de rotor (B1, B2, B3, B4, B5), au niveau de laquelle les bras de raccordement (12, 14) se chevauchent (16) et dans laquelle se situe au moins l'une des articulations auxiliaires en battement (H1, H2).

26. Rotor selon la revendication 24 ou 25,
**caractérisé en ce que**
l'élément de transfert de couple (4) est déformable en torsion dans la direction de battement de l'au moins une pale de rotor (B1, B2, B3, B4, B5).

27. Rotor selon l'une quelconque ou plusieurs des revendications précédentes,
**caractérisé en ce que**
la pale de rotor (B1, B2, B3, B4, B5) présente dans la région de raccordement des pales (12, 14 ; 16 ; 30) au moins deux éléments de dissipation de la force centrifuge espacés l'un de l'autre dans la direction longitudinale ou dans la direction de la force centrifuge, dont au moins un (18) reçoit les forces centrifuge s'exerçant sur la pale de rotor (B1, B2, B3, B4, B5) pendant le fonctionnement continu du rotor.

28. Rotor selon l'une quelconque ou plusieurs des revendications précédentes,
**caractérisé en ce qu'**
au moins l'une des deux articulations auxiliaires en battement (H1, H2) espacées l'une de l'autre dans la direction longitudinale de la pale de rotor (B1, B2, B3, B4, B5), ou des parties (18) de celles-ci, sont configurées sous forme d'élément de dissipation de la force centrifuge.

29. Rotor selon l'une quelconque ou plusieurs des revendications précédentes,
**caractérisé en ce que**
les pales du rotor (B1, B2, B3, B4, B5) sont connectées les unes aux autres dans la région de leurs articulations auxiliaires en battement (H1, H2) et au moins à chaque fois une articulation auxiliaire en battement (H1, H2) ou une partie (18) de celle-ci, d'une pale de rotor respective (B1, B2, B3, B4, B5), est réalisée sous la forme d'un élément de dissipation de la force centrifuge pour au moins une autre pale de rotor respective (B1, B2, B3, B4, B5).

30. Giravion, notamment hélicoptère, notamment un hélicoptère à rotor basculant, comprenant au moins un rotor selon l'une quelconque ou plusieurs des revendications 1 à 29.
